**Europäisches Patentamt**

**European Patent Office**

**Office européen des brevets**

(19)

(11) Veröffentlichungsnummer: **0 069 920**

**A2**

(12) # EUROPÄISCHE PATENTANMELDUNG

(21) Anmeldenummer: **82105849.2**

(22) Anmeldetag: **01.07.82**

(51) Int. Cl.³: **F 16 L 23/02**

(30) Priorität: **09.07.81 DE 3127034**
**17.04.82 DE 3214151**

(43) Veröffentlichungstag der Anmeldung:
**19.01.83 Patentblatt 83/3**

(84) Benannte Vertragsstaaten:
**AT BE CH FR GB IT LI LU NL SE**

(71) Anmelder: **Smitka, Günter**
**FriedenstraBe 9**
**D 5860 Iserlohn 7(DE)**

(72) Erfinder: **Smitka, Günter**
**FriedenstraBe 9**
**D 5860 Iserlohn 7(DE)**

(74) Vertreter: **Patentanwälte Dipl.-Ing. Conrad Köchling**
**Dipl.-Ing. Conrad-Joachim Köchling**
**Fleyer Strasse 135**
**D-5800 Hagen(DE)**

(54) **Flansch zur Verbindung von Kanalteilstücken aus Blech.**

(57) Um bei einem Flansch zur Verbindung von im Querschnitt rechteckigen Kanalteilstücken aus Blech für lufttechnische Hochdruckanlagen, bestehend aus an den Enden der Kanalteilstücke rahmenartig zu befestigenden Profilen mit zur jeweiligen Kanalseitenwand senkrecht und parallel verlaufenden Wänden zum Einschieben der Enden von Kanalteilstücken und zur Aufnahme von in die stirnseitigen Öffnungen der Hohlprofile einsteckbaren Schenkeln von Winkelstücken, wobei die Winkelstücke als Blechformteile geringer Dicke mit angeformten Sicken ausgebildet sind, unter Verminderung des Werkstoffeinsatzes eine Gewichtsersparnis, aber dennoch gleiche Stabilität zu erreichen, wird vorgeschlagen, daß die Hohlprofile (2) jeweils in einer der zur Kanalstirnseite gleichgerichteten Wänden (3, 4) mindestens eine längsverlaufende, über die gesamte Länge des Hohlprofiles sich erstreckende, mündungsseitig offene Sicke (12, 16) aufweisen, und daß die Winkelstückschenkel (9, 10) jeweils mindestens eine ausschließlich in deren Einsteckrichtung verlaufende, der Sicke des Hohlprofiles nach Form und Lage angepaßte, in letztere einsteckbare Sicke (13) haben und zumindest neben den Sicken (12, 13, 16) die Hohlprofile ausfüllend profiliert sind.

Fig.5

PATENTANWÄLTE

DIPL.-ING. CONRAD KÖCHLING
DIPL.-ING. CONRAD-JOACHIM KÖCHLING

Fleyer Straße 135, 5800 Hagen
Ruf (0 23 31) 8 11 64 + 8 50 33
Telegramme: Patentköchling Hagen

Konten: Commerzbank AG. Hagen
(BLZ 450 400 42) 3 515 095
Sparkasse Hagen 100 012 043
Postscheck: Dortmund 5989 - 460

Aktenzeichen:  0069920

VNR: ........................................................

Lfd. Nr. ......... A 5464/82 .........................

vom .........24. Juni 1982.........................

- 1 -

Flansch zur Verbindung von Kanalteilstücken aus Blech.

Die Erfindung betrifft einen Flansch der im Oberbegriff des Anspruches 1 offenbarten Gattung.

Bei einem aus dem DE-GM 77 21 055 bekannten Flansch, von dem die Erfindung ausgeht, sind an den als Blechformteile ausgebildeten Winkelstücken Sicken angeformt, die bei gleicher Stabilität durch Verminderung des Werkstoffaufwandes u.a. die Herstellungskosten vermindern.

Jene Flansche erfordern aber dennoch relativ dicke Hohlprofil-Wände, um auch den vorzugsweise aus Blech hergestellten Hohlprofilen eine ausreichende Stabilität zu verleihen.

Darüber hinaus bestehen hierbei erhebliche Schwierigkeiten, um die in die Endteile der Hohlprofile einge-

- 2 -

steckten Eckwinkel durch Körner oder Punktschweißstellen in Einsteckrichtung der Winkelstückschenkel
sicher festzulegen.

Mit der Erfindung wird nun für einen Flansch der
im Oberbegriff des Anspruches 1 beschriebenen Gattung unter Beibehaltung der bei dem aus dem
DE-GM 77 21 055 bekannten Gegenstand bereits erreichten Vorteile eine weitere kostensparende Gestaltung angestrebt.

Der Erfindung liegt die Aufgabe zugrunde , die Stabilität derartiger Flanschverbindungen zu verbessern,
insbesondere bei geringerem Materialaufwand zumindest gleiche Stabilität zu erzeugen.

Die Lösung dieser Aufgabe ist im Anspruch 1 gekennzeichnet.

Hierdurch können nunmehr auch die Hohlprofile, den
Werkstoffaufwand und demzufolge auch ihr Eigengewicht
erheblich senkend, mit erheblich dünneren Wanddicken
als bislang ausgebildet werden, ohne deren Stabilität

- 3 -

zu mindern.

Zudem wird durch die beanspruchte Gestaltung der Hohlprofile und der Winkelstücke zwangsläufig eine lagerichtige Montage der Winkelstücke in den Hohlprofilen
sichergestellt und auch nach der Montage zwangsläufig
durch Formschluß aufrechterhalten, ohne daß es hierzu zusätzlicher Maßnahmen bedarf.

Darüber hinaus ist auch beim Körnen oder Punktschweißen
zur Sicherung der Winkelstücke in Einsteckrichtung
ihrer Schenkel gewährleistet, daß den von außen an den
Hohlprofilen anzubringenden Körnern oder Punktschweißstellen innenseitig in jedem Fall auch Winkelstückzonen spiellos gegenüberstehen, die zur Verbindung
unerläßlich sind, wenn die Körner oder Punktschweißstellen nahe der Sicken positioniert werden, so daß
nunmehr eine formschlüssige Verbindung zur Sicherung
der Steckverbindungen nicht mehr wie beim Stand der
Technik dem Zufall überlassen ist.

Bevorzugter Weise sind die Sicken, wie im Anspruch 2
offenbart, angeordnet und ausgebildet.

0069920

- 4 -

Zudem können auch in den der Kanalstirnseite zugewandten Hohlprofilwänden und dementsprechend in den
Winkelstückschenkeln nach innen durchgedrückte Sicken
vorgesehen sein.

Hieraus resultiert einerseits eine weitere Erhöhung der
Stabilität. Andererseits bilden die nach innen durchgedrückten Sicken lagesichere Aufnahmen für zwischen
benachbarten Flanschen anzuordnende Dichtungen, woraus
sich auch eine Vereinfachung der Montage ergibt.

Zur weiteren Vereinfachung der Montage und somit zur
weiteren Senkung der Kosten ist es vorteilhaft, den
vorbeschriebenen Flansch, wie im Anspruch 4 gekennzeichnet auszubilden.

Eine weitere Lösung der Aufgabe ist im Kennzeichenteil des Anspruches 5 bezeichnet.

Eine dazu parallele Lösung ist im Anspruch 6 bezeichnet.

Durch die beanspruchte Kombination gemäß Anspruch 5
werden die Hohlprofile und Winkelstücke zwangsläufig
in eine lagerichtige Position bei der Montage geführt.

- 5 -

Dabei bleibt auch nach der Montage der Formschluß zwangsläufig aufrecht erhalten.

Desweiteren ist auch beim Körnen oder Punktschweißen zur Sicherung der Winkelstücke in der eingeschobenen Position ihrer Schenkel gewährleistet, daß den von außen an den Hohlprofilen anzubringenden Körnern oder Punktschweißstellen innenseitig in jedem Fall auch Winkelstückzonen spiellos gegenüberstehen, die zur Verbindung unerläßlich sind, wenn die Körner oder Punktschweißstellen nahe den Sicken positioniert werden, so daß eine formschlüssige Verbindung zur Sicherung der Steckverbindungen zwangsläufig erzielt wird.

Bei der Lösung gemäß Anspruch 6 wird zwar auf die Materialeinsparung beim Eckwinkel verzichtet, jedoch wird durch die entsprechende Ausbildung des Flanschprofiles eine wesentliche Werkstoffersparnis erreicht, wobei die Stabilität der Flanschverbindung nicht beeinträchtigt ist.

Auch bei dieser Ausführungsform stehen ausreichend einander spiellos gegenüberstehende Zonen von Winkelstück und Profil zur Verfügung, die zur Anbringung von Körnerstellen oder Punktschweißstellen genutzt werden können.

Eine Weiterbildung der Erfindung ist im Anspruch 7 bezeichnet

Bei dieser Ausführungsform bilden die Sickenböden die satten Anlageflächen zwischen Eckwinkel und Profil, so daß in diesen Bereichen die Körnerstellen bezw. Schweißpunkte anzuordnen sind.

Ausführungsbeispiele der Erfindung sind in den Zeichnungen dargestellt und werden im folgenden näher beschrieben.

Es zeigen:

Figur 1 einen Teil eines Kanalteilstückes mit Teilen eines Flansches in perspektivischer Darstellung,

Figur 2 ein Flansch-Eckwinkelstück in der Vorderansicht,

Figur 3 desgleichen im Schnitt III-III,

Figur 4 desgleichen im Schnitt IV-IV,

Figur 5+6 Varianten eines Flansches jeweils im Querschnitt,

Figur 7 eine Variante wie Figur 2 gesehen,

Figur 8 desgleichen im Schnitt VIII-VIII,

Figur 9 eine Variante des Flansches mit eingestecktem Eckwinkel im Querschnitt,

Figur 10 eine weitere Variante in gleicher Ansicht.

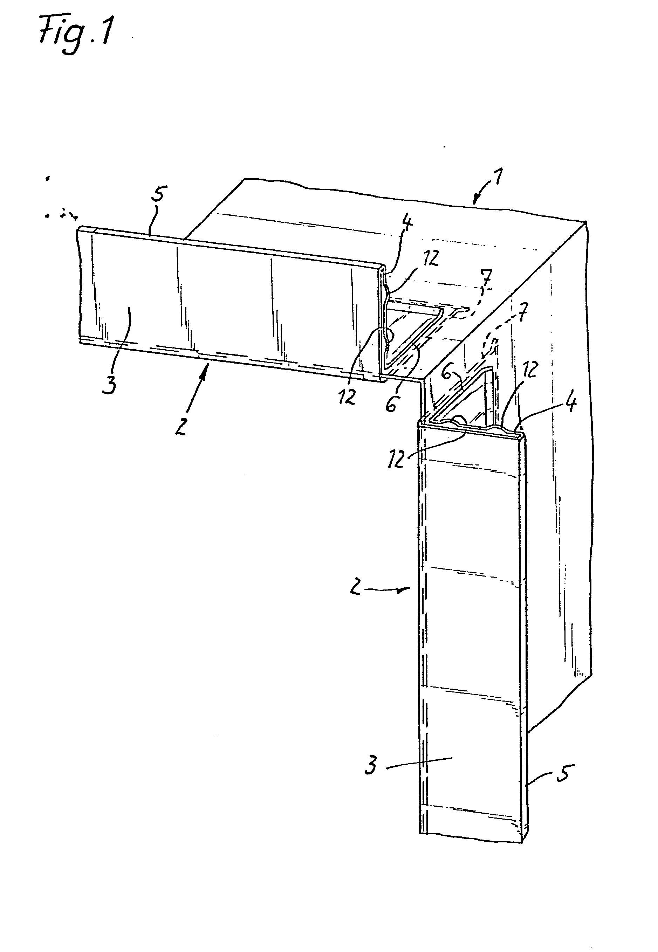

In Figur 1 sind auf die zueinander rechtwinklig angeordneten Wände eines aus Blech geformten Kanalstückes 1, wovon nur zwei Wände dargestellt sind, je ein aus Blech geformtes Hohlprofil 2 aufgesteckt.

Diese Hohlprofile 2/haben zwei zur Kanal-Stirnseite parallel verlaufende Wände 3 und 4, eine letztere überbrückende Wand 5 und zwei zur jeweiligen Kanalseitenwand parallel verlaufende Wände 6 und 7.

Letztere sind mit einem solchen Abstand voneinander angeordnet, daß die jeweilige Kanalseitenwand zwischen diesen kraftschlüssig eingespannt ist.

Zur Verbindung benachbarter Hohlprofile 2 miteinander sind aus den Figuren 1 bis 10 ersichtliche Winkelstücke 8 vorgesehen. Letztere sind als Blechformteile ausgebildet und haben zwei zueinander rechtwinklig angeordnete, flache Schenkel 9 und 10, deren lange Profilseiten jeweils in gemeinsamen Ebenen angeordnet sind.

Die Winkelstückschenkel werden bis zur Anlage an nahe des Eckbereiches der Winkelstücke 8 vorgesehene Schultern 11 in die stirnseitigen Öffnungen der Hohlprofile 2 eingesteckt.

In Figur 1 sind in den Wänden 4 der Hohlprofile 2 zwei längs dieser und zueinander parallel verlaufende,

- 9 -

nach außen vorstehende, mündungsseitig offene Sicken
12 angeformt.

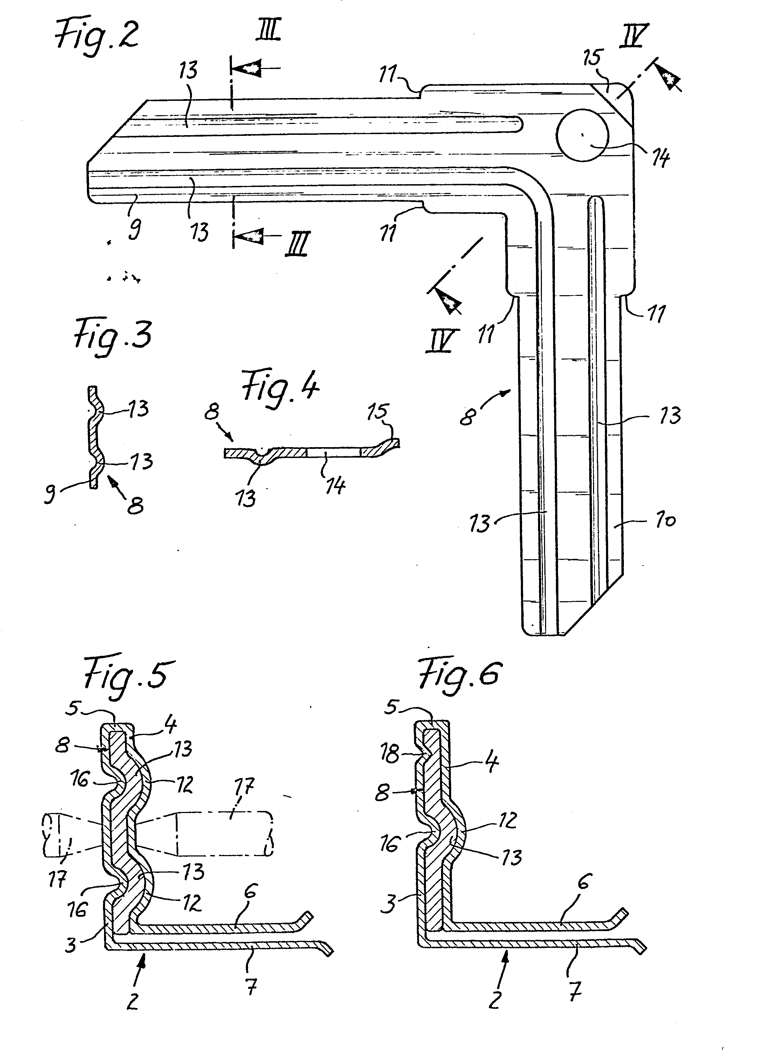

Ferner sind in den Schenkeln 9 und 10 des in den Figuren 2 bis 4 dargestellten Winkelstückes 8 zwei in
Längsrichtung der Schenkel gerichtete Sicken 13 so
angeformt, daß beim Einstecken der Schenkel in die
stirnseitigen Öffnungen der Hohlprofile 2 die Sicken
13 in die Rinnen der Sicken 12 spielfrei eingreifen.
Zudem sind die Winkelstückschenkel 9, 10 so profiliert,
daß sie neben den Sicken 13 den von den Wänden 3,4
und 5 umgrenzten Hohlraum ausfüllen.

Die Profilhöhe der Winkelstückschenkel 9 und 10 ist
so gewählt, daß in Fortsetzung des Zwischenraumes
zwischen den Wänden 6 und 7 zur Wand 3 hin ein so
großer Raum freibleibt, um die jeweilige Kanalwand
bis zur Anlage an der Innenseite der Wand 3 zwischen
die Wände 6 und 7 einstecken zu können.

Die Sicken 13 reichen in Richtung zum Eckbereich
eines Winkelstückes über die Schultern 11 hinaus und
können, wie dies aus der Figur 2 ersichtlich, in die
jeweilige Sicke des anderen Winkelstückschenkels übergehen, um zusätzlich auch den Eckbereich des Winkelstückes 8 zu versteifen.

Außerdem sind in den Eckbereichen der Winkelstücke 8 Löcher 14 zur Aufnahme von Schrauben vorgesehen, mit welchen benachbarte Flansche miteinander verbunden werden können.

Weiterhin sind Randteile 15 der Eckwinkel 8 zur freien Stirnseite hin abgebogen, an welchen sich benachbarte Flansche auch im Bereich der Winkelstückecken unmittelbar aneinander abstützen können.

Bei der in Figur 5 dargestellten Variante sind auch in der Wand 3 zwei längs dieser gerichtete Sicken 16 so angeformt, daß diese in die Rinnen der Sicken 13 formschlüssig eingreifen.

Außerdem sind in Figur 5 in strichpunktierten Linien die Elektroden 17 einer Punktschweißmaschine eingezeichnet worden, mit deren Hilfe die in die Hohlprofile 2 eingesteckten Winkelstückschenkel auch stoffschlüssig miteinander verbunden werden können, wobei sichergestellt ist, daß zwischen den Angriffsstellen

- 11 -

der Elektroden 17 der Hohlraum des Profils 2 durch den jeweils eingesteckten Winkelstückschenkel ausgefüllt ist, um zwischen beiden Wänden 3 und 4 und dem eingesteckten Winkelstückschenkel haltbare Schweißverbindungen erzielen zu können.

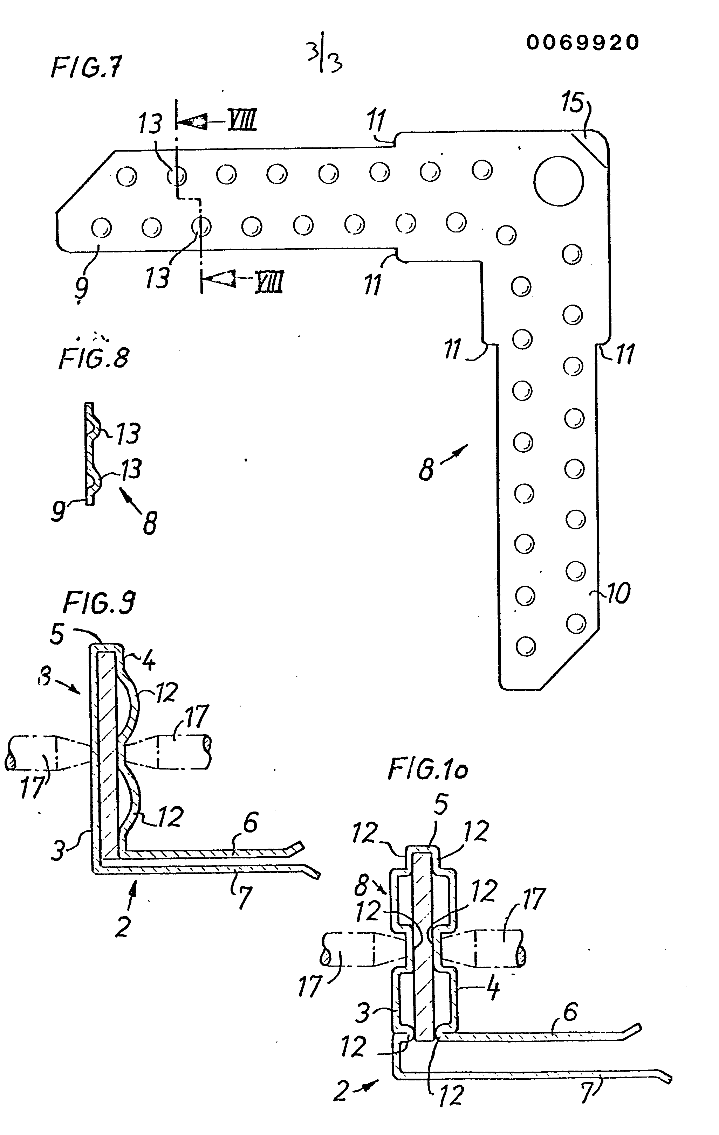

In Figur 6 ist die Steckverbindung zwischen einem Hohlprofil 2 und einem eingesteckten Winkelstückschenkel 9 bezw. 10 in Richtung dessen Längserstreckun-g mittels eines Körners 18 gesichert, der in der Wand 3 angeordnet ist und sich bis in den Winkelstückschenkel fortsetzt.

Gemäß Figur 1 sind in den Wänden 4 der Hohlprofile 2 zwei längs dieser und zueinander parallel verlaufende, nach außen vorstehende, mündungsseitig offene Sicken 12 angeformt.

In den Schenkeln 9, 10 des in Figur 7 und 8 dargestellten Winkelstückes 8 sind jeweils in Längsrichtung der Schenkel Sicken 13 in Form von Reihen von durchgedrückten Nocken angeordnet. Die Anordnung ist derart, daß beim Einstecken der Schenkel in die stirnseitigen Öffnungen der Hohlprofile 2 die durch Nocken gebildeten Sicken 13 in die Rinnen der Sicken 12 spielfrei eingreifen. Zudem sind die Winkelstückschenkel 9,10 so profiliert, daß sie neben den Sicken 13 den von den Wänden 3, 4 und 5 umgrenzten Hohlraum ausfüllen.

Die Profilhöhe der Winkelstückschenkel 9 und 10 ist so gewählt, daß in Fortsetzung des Zwischenraumes zwischen den Wänden 6 und 7 zur Wand 3 hin ein so großer Raum freibleibt, daß die jeweilige Kanalwand bis zur Anlage an der Innenseite der Wand 3 zwischen die Wände 6 und 7 eingesteckt werden kann.

Auch hier sind in den Eckbereichen der Winkelstücke 8 Löcher 14 zur Aufnahme von Schrauben vorgesehen, mit welchen benachbarte Flansche miteinander verbunden werden können.

Bei der in Figur 9 dargestellten Variante ist der Eckwinkel 8 mit seinen Winkelstückschenkeln 9 und 10 eben, also ungesickt ausgebildet. Hingegen ist die Wand 4 des Hohlprofiles 2 mit zueinander parallel verlaufenden, nach außen vorstehenden, mündungsseitig offenen Sicken 12 versehen (Figur 9). Auf diese Weise wird eine Versteifung des Flanschprofiles erreicht, wobei bisher übliche ebene Eckwinkel einsetzbar sind.

In Figur 9 sind wiederum in strichpunktierten Linien die Elektroden 17 einer Punktschweißmaschine eingezeichnet, mit deren Hilfe die in die Hohlprofile 2 eingesteckten Winkelstückschenkel auch stoffschlüssig mit den Profilwänden verbunden werden können, wobei sichergestellt ist, daß zwischen den Angriffsstellen der Elektroden 17 der Hohlraum des Profiles 2 durch den jeweils eingesteckten Winkelstückschenkel vollständig ausgefüllt ist, um zwischen beiden Wänden 3 und 4 und dem eingesteckten Winkelstückschenkel haltbare Schweißverbindungen erzielen zu können.

Gleiches gilt auch für die Anordnung von Körnerpunkten.

In Figur 10 ist eine weitere Variante dargestellt, bei der in beiden Hohlprofilseitenwänden 3 und 4 Sicken nach innen eingedrückt sind, deren Böden großflächig eben ausgebildet sind und die lichte Weite zwischen diesen Böden der Dicke des passenden

- 14 -

Eckwinkelschenkels genau angepaßt ist.

Auf diese Weise wird eine Versteifung des Verbindungsprofiles erreicht und weiterhin sind dennoch satte Anlageflächen für die Anbringung von Körnerpunkten und/oder Punktschweißstellen vorhanden.

- 15 -

Patentansprüche

1. Flansch zur Verbindung von im Querschnitt im wesentlichen rechteckigen Kanalteilstücken aus Blech, insbesondere für lufttechnische Hochdruckanlagen, bestehend aus an den Enden der Kanalteilstücke rahmenartig zu befestigenden Profilen mit zur jeweiligen Kanalseitenwand senkrecht und parallel verlaufenden Wänden zum Einschieben der Enden von Kanalteilstücken und zur Aufnahme von in die stirnseitigen Öffnungen der Hohlprofile einsteckbaren Schenkeln von Winkelstücken, wobei die Winkelstücke als Blechformteile geringer Dicke mit angeformten Sicken ausgebildet sind, dadurch gekennzeichnet daß die Hohlprofile (2) jeweils mindestens in einer der zur Kanalstirnseite im wesentlichen gleichgerichteten Wände (3,4) mindestens eine längsverlaufende, über die gesamte Länge des Hohlprofiles sich erstreckende, mündungsseitig offene Sicke (12,16) aufweisen, und daß die Winkelstückschenkel (9,10) jeweils mindestens eine ausschließlich in deren Einsteckrichtung verlaufende, der Sicke des Hohlprofils nach Lage und und Form angepaßte, in letztere einsteckbare Sicke (13) haben und zumindest neben den Sicken (12,13,16) die Hohlprofile ausfüllend profiliert sind.

2. Flansch nach Anspruch 1, dadurch gekennzeichnet, daß die Sicken (12) der Hohlprofile (2) jeweils in der der Kanalstirnseite abgewandten Wand (4) angeordnet und nach außen durchgedrückt ausgebildet sind.

3. Flansch nach Anspruch 1 oder 2, dadurch gekennzeichnet, daß in den der Kanalstirnseite zugewandten Hohlprofilwänden (3) und dementsprechend in den Winkelstückschenkeln (9+10) nach innen durchgedrückte Sicken (16) vorgesehen sind.

4. Flansch nach einem der Ansprüche 1 bis 3, dadurch gekennzeichnet, daß die Eckbereiche der Winkelstücke (8) zur Kanalstirnseite hin abgebogene Randteile (15) aufweisen.

5. Flansch nach einem der Ansprüche 1 bis 4, dadurch gekennzeichnet, daß die Sicken (13) der Winkelstückschenkel (9,10) durch Nocken oder dergl. bezw. Reihen von Nocken gebildet sind.

6. Flansch nach einem der Ansprüche 1 bis 4, dadurch gekennzeichnet, daß die Winkelstückschenkel in an sich bekannter Weise eben ausgebildet sind.

7. Flansch nach Anspruch 6, dadurch gekennzeichnet, daß bei nach innen durchgedrückten Sicken in einer der oder beiden Hohlprofilwänden (3,4) die Sickenböden großflächig eben ausgebildet sind und bei beidseits der Wände (3,4) eingedrückten Sicken die lichte Weite zwischen den Böden bezw. bei einseitig in eine Wand (3 oder 4) eingedrückter Sicke(n) die lichte Weite zwischen dem Boden der Sicke und der gegenüberstehenden Wand mindestens etwa der Dicke des passenden Eckwinkelschenkels angepaßt, insbesondere gering kleiner als letztere ist.

*Fig.1*

Fig.2

Fig.3

Fig.4

Fig.5

Fig.6

0069920

FIG.7

FIG.8

FIG.9

FIG.1o